# EUROPEAN PATENT APPLICATION

(11) **EP 4 175 007 A1**
(43) Date of publication of application: **03.05.2023**
(21) Application number: 22203380.5
(22) Date of filing: 24.10.2022
(51) Int. Cl.: H01M 10/42, H01M 10/48, H01M 50/204

(54) **SAFETY DETECTION METHOD FOR BATTERY MODULE, BATTERY MODULE, BATTERY PACK, AND ENERGY STORAGE SYSTEM**

(30) Priority: 27.10.2021 CN 202111258535
(71) Applicant: Huawei Digital Power Technologies Co., Ltd., Shenzhen, 518043 (CN)
(72) Inventor: LIU, Rutao, Shenzhen, 518129 (CN); ZHU, Jing, Shenzhen, 518129 (CN); ZHONG, Zheng, Shenzhen, 518129 (CN); ZHI, Hanqian, Shenzhen, 518129 (CN)
(74) Representative: Epping - Hermann - Fischer

(57) **Abstract**

This application provides a safety detection method for a battery module, a battery module, a battery pack, and an energy storage system. The battery module includes a plurality of temperature sensors and a plurality of batteries, and the plurality of temperature sensors include a first temperature sensor. The method includes: obtaining a plurality of battery temperatures detected by the plurality of temperature sensors at a first moment; determining a standard battery temperature based on the plurality of battery temperatures detected by the plurality of temperature sensors at the first moment; obtaining a second battery temperature of a first battery set at a second moment; determining a temperature change rate of first battery set based on a first battery temperature, a second battery temperature, the first moment, and the second moment; and determining that a battery in the first battery set has a liquid leakage risk when a third difference between the first battery temperature detected by the first temperature sensor at the first moment and the standard battery temperature is greater than a first temperature threshold, and the temperature change rate is greater than a temperature change rate threshold. According to this application, safety detection costs can be reduced, and applicability is high.

## Description

### TECHNICAL FIELD

This application relates to the field of battery safety technologies, and in particular, to a safety detection method for a battery module, a battery module, a battery pack, and an energy storage system.

### BACKGROUND

During running and application of a battery, there are the following two cases in which an explosion-proof valve of the battery may be opened and an air leakage and a liquid leakage occur: (1) When the battery is in a harsh operating environment or in a complicated operating condition, gas is easily generated inside the battery. After an amount of gas inside the battery continuously increases, and consequently, pressure inside the battery reaches pressure of opening the explosion-proof valve, the explosion-proof valve is opened on impact, resulting in a phenomenon that the valve is opened and an air leakage occurs, followed by a liquid leakage. (2) In a case of thermal abuse, electrical abuse, or mechanical abuse of the battery, a fault occurs inside the battery. The fault continues developing until thermal runaway occurs. A large amount of gas is generated rapidly due to a chemical reaction inside the battery. Consequently, pressure inside the battery increases rapidly, and finally, the explosion-proof valve is open, and a liquid leakage occurs. Once the valve of the battery is opened, a flammable electrolyte is leaked. If operation and management measures are not taken in a timely manner, an adverse consequence such as firing or exploding may occur, which poses a very great safety risk.

Currently, a liquid leakage risk detection method for a battery is mainly to dispose a gas detector at an air exhaust vent of each battery box, and the gas detector is used to detect a gas concentration of an electrolyte volatilized by a battery in a corresponding battery box, to determine whether the battery has a liquid leakage risk. However, in the manner, each battery box needs to be provided with an additional gas detector, and detection costs are high.

### SUMMARY

This application provides a safety detection method for a battery module, a battery module, a battery pack, and an energy storage system. Safety detection of a battery in the battery module may be implemented by using an existing temperature sensor in the battery module, and an additional detection component does not need to be added. There is a simple structure and low detection costs.

According to a first aspect, this application provides a safety detection method for a battery module. The battery module includes a plurality of temperature sensors and a plurality of batteries, each temperature sensor corresponds to one battery or a plurality of batteries located in a same row, each temperature sensor is configured to detect a battery temperature of at least one battery corresponding to the temperature sensor, and the plurality of temperature sensors include a first temperature sensor. The method includes: obtaining a plurality of battery temperatures detected by the plurality of temperature sensors at a first moment; determining a standard battery temperature based on the plurality of battery temperatures detected by the plurality of temperature sensors at the first moment; obtaining a second battery temperature detected by the first temperature sensor at a second moment; calculating a temperature change rate of a first battery set based on a first difference between a first battery temperature detected by the first temperature sensor at the first moment and the second battery temperature and a second difference between the first moment and the second moment, where the second moment is later than the first moment; and when a third difference (namely, an absolute difference) between the first battery temperature and the standard battery temperature is greater than a first temperature threshold, and the temperature change rate is greater than a temperature change rate threshold, determining that a battery in the first battery set has a liquid leakage risk. Therefore, not only a liquid leakage risk of a battery module 1 can be detected, but also a battery having a liquid leakage risk can be positioned, and an additional detection component does not need to be added. There is a simple structure, low detection costs, and strong applicability.

With reference to the first aspect, in a first possible implementation, an average value of the plurality of battery temperatures detected by the plurality of temperature sensors at the first moment is determined as the standard battery temperature. It can be understood that the standard battery temperature may be the average value of the plurality of battery temperatures detected by all the temperature sensors in the battery module, or may be an average value of some battery temperatures detected by some temperature sensors in the battery module. There is high flexibility. With reference to the first aspect, in a second possible implementation, the first battery set includes a first battery. The method further includes: obtaining a battery voltage of each of the plurality of batteries at the first moment, where a voltage of the first battery at the first moment is a first battery voltage; determining a standard battery voltage based on the battery voltage of each of the plurality of batteries at the first moment; and when a fourth difference between the first battery voltage and the standard battery voltage is greater than a first voltage threshold, which indicates that the first battery voltage of the first battery is subject to an outlier, determining that the first battery is faulty, and warning that an electrochemical cell of the first battery is faulty, so that a worker replaces the faulty electrochemical cell of the first battery as soon as possible, to reduce fault maintenance duration of the battery module.

With reference to the first aspect, in a third possible implementation, the method further includes: obtaining a second battery voltage of the first battery at the second moment; determining a voltage change rate of the first battery based on a fifth difference between the second battery voltage and the first battery voltage and the second difference; and when the fourth difference between the first battery voltage and the standard battery voltage is greater than the first voltage threshold, and the voltage change rate is greater than a voltage change rate threshold, which indicates that the first battery voltage of the first battery is subject to an outlier and a voltage of the first battery changes too quickly, determining that the first battery is faulty. Compared with a previous implementation, in this implementation, not only whether the voltage of the first battery is subject to an outlier is considered, but also a factor of whether the voltage of the first battery changes too quickly is considered. Therefore, fault detection accuracy of an electrochemical cell of a battery can be effectively improved, and there is strong applicability.

With reference to the first aspect, in a fourth possible implementation, an average value of battery voltages of all of the plurality of batteries at the first moment is determined as the standard battery voltage. It can be understood that, the standard battery voltage may be the average value of the battery voltages of all the batteries in the battery module, or may be an average value of battery voltages of some batteries including the first battery in the battery module. There is high flexibility.

With reference to the first aspect, in a fifth possible implementation, the first moment is adjacent to the second moment when a battery temperature that is of the first battery set and that is detected by the first temperature sensor is obtained at a preset frequency.

With reference to the first aspect, in a sixth possible implementation, each of the plurality of batteries corresponds to one temperature sensor. Specifically, one temperature sensor may correspond to one to three batteries, and at least one battery corresponding to each of the plurality of temperature sensors is different from each other. It can be understood that, it only needs to be ensured that a distribution rule of the temperature sensor in the battery module meets a condition that one temperature sensor may correspond to one to three batteries, and batteries corresponding to each temperature sensor are different from each other. There is high flexibility.

According to a second aspect, this application provides a safety detection method for a battery module. The battery module includes a plurality of temperature sensors and a plurality of batteries, each temperature sensor corresponds to one battery or a plurality of batteries located in a same row, each temperature sensor is configured to detect a battery temperature of at least one battery corresponding to the temperature sensor, and the plurality of temperature sensors include a first temperature sensor. The method includes: obtaining a plurality of battery temperatures detected by the plurality of temperature sensors at a first moment; determining a standard battery temperature based on the plurality of battery temperatures detected by the plurality of temperature sensors at the first moment; and when a third difference (namely, an absolute difference) between a first battery temperature detected by the first temperature sensor at the first moment and the standard battery temperature is greater than a first temperature threshold, and the first battery temperature is greater than a second temperature threshold, determining that a battery in a first battery set has a thermal runaway risk, where the second temperature threshold is greater than the first temperature threshold. Therefore, not only a thermal runaway risk of the battery module can be detected, but also a battery having a thermal runaway risk can be positioned, and an additional detection component does not need to be added. There is a simple structure, low detection costs, and strong applicability.

With reference to the second aspect, in a first possible implementation, an average value of the plurality of battery temperatures detected by the plurality of temperature sensors at the first moment is determined as the standard battery temperature. It can be understood that the standard battery temperature may be the average value of the plurality of battery temperatures detected by all the temperature sensors in the battery module, or may be an average value of some battery temperatures detected by some temperature sensors in the battery module. There is high flexibility. With reference to the second aspect, in a second possible implementation, the first battery set includes a first battery. The method further includes: obtaining a battery voltage of each of the plurality of batteries at the first moment, where a voltage of the first battery at the first moment is a first battery voltage; determining a standard battery voltage based on the battery voltage of each of the plurality of batteries at the first moment; and when a fourth difference (namely, an absolute difference) between the first battery voltage and the standard battery voltage is greater than a first voltage threshold, which indicates that the first battery voltage of the first battery is subject to an outlier, determining that the first battery is faulty, and warning that an electrochemical cell of the first battery is faulty, so that a worker replaces the faulty electrochemical cell of the first battery as soon as possible, to reduce fault maintenance duration of the battery module.

With reference to the second aspect, in a third possible implementation, when the fourth difference between the first battery voltage and the standard battery voltage is greater than the first voltage threshold, and the first battery voltage is greater than a second voltage threshold, which indicates that the first battery voltage of the first battery is subject to an outlier and a voltage of the first battery changes too quickly, it is determined that the first battery is faulty, where the first voltage threshold is less than the second voltage threshold. Compared with a previous implementation, in this implementation, not only whether the voltage of the first battery is subject to an outlier is considered, but also a factor of whether the voltage of the first battery changes too quickly is considered. Therefore, fault detection accuracy of an electrochemical cell of a battery can be effectively improved, and there is strong applicability.

With reference to the second aspect, in a fourth possible implementation, an average value of battery voltages of all of the plurality of batteries at the first moment is determined as the standard battery voltage. It can be understood that, the standard battery voltage may be the average value of the battery voltages of all the batteries in the battery module, or may be an average value of battery voltages of some batteries including the first battery in the battery module. There is high flexibility.

With reference to the second aspect, in a fifth possible implementation, each of the plurality of batteries corresponds to one temperature sensor. Specifically, one temperature sensor may correspond to one to three batteries, and at least one battery corresponding to each of the plurality of temperature sensors is different from each other. It can be understood that, it only needs to be ensured that a distribution rule of the temperature sensor in the battery module meets a condition that one temperature sensor may correspond to one to three batteries, and batteries corresponding to each temperature sensor are different from each other. There is high flexibility.

According to a third aspect, this application provides a battery module. The battery module includes a battery management system, a plurality of temperature sensors, and a plurality of batteries, and the plurality of temperature sensors include a first temperature sensor. The temperature sensor detects battery temperatures of one or more batteries that are located in a same row and that correspond to the temperature sensor. The battery management system obtains a plurality of battery temperatures detected by the plurality of temperature sensors at a first moment; determines a standard battery temperature based on the plurality of battery temperatures detected by the plurality of temperature sensors at the first moment; obtains a second battery temperature detected by the first temperature sensor at a second moment; calculates a temperature change rate of a first battery set based on a first difference between a first battery temperature detected by the first temperature sensor at the first moment and the second battery temperature and a second difference between the first moment and the second moment; and when a third difference between the first battery temperature and the standard battery temperature is greater than a first temperature threshold, and the temperature change rate is greater than a temperature change rate threshold, determines that a battery in the first battery set has a liquid leakage risk.

With reference to the third aspect, in a first possible implementation, the battery management system determines, as the standard battery temperature, an average value of the plurality of battery temperatures detected by the plurality of temperature sensors at the first moment.

With reference to the third aspect, in a second possible implementation, the first battery set includes a first battery. When determining that the battery in the first battery set has a liquid leakage risk, the battery management system may further obtain a battery voltage of each of the plurality of batteries at the first moment, where a voltage of the first battery at the first moment is a first battery voltage; determine a standard battery voltage based on the battery voltage of each of the plurality of batteries at the first moment; and when a fourth difference between the first battery voltage and the standard battery voltage is greater than a first voltage threshold, determine that the first battery is faulty.

With reference to the third aspect, in a third possible implementation, when determining that the battery in the first battery set has a liquid leakage risk, the battery management system may further obtain a second battery voltage of the first battery at the second moment, and determine a voltage change rate of the first battery based on a fifth difference between the second battery voltage and the first battery voltage and the second difference; and when the fourth difference between the first battery voltage and the standard battery voltage is greater than the first voltage threshold, and the voltage change rate is greater than a voltage change rate threshold, determine that the first battery is faulty.

With reference to the third aspect, in a fourth possible implementation, the battery management system determines an average value of battery voltages of all of the plurality of batteries at the first moment as the standard battery voltage. With reference to the third aspect, in a fifth possible implementation, the first moment is adjacent to the second moment.

With reference to the third aspect, in a sixth possible implementation, each of the plurality of batteries corresponds to one temperature sensor.

According to a fourth aspect, this application provides a battery module. The battery module includes a battery management system, a plurality of temperature sensors, and a plurality of batteries, and the plurality of temperature sensors include a first temperature sensor. The temperature sensor detects battery temperatures of one or more batteries that are located in a same row and that correspond to the temperature sensor. The battery management system obtains a plurality of battery temperatures detected by the plurality of temperature sensors at a first moment, where a battery temperature detected by a first temperature sensor at the first moment is a first battery temperature of a first battery set, and a battery included in the first battery set is located in the plurality of batteries and corresponds to the first temperature sensor; determines a standard battery temperature based on the plurality of battery temperatures detected by the plurality of temperature sensors at the first moment; and when a third difference between the first battery temperature and the standard battery temperature is greater than a first temperature threshold, and the first battery temperature is greater than a second temperature threshold, determines that the battery in the first battery set has a thermal runaway risk, where the second temperature threshold is greater than the first temperature threshold.

With reference to the fourth aspect, in a first possible implementation, the battery management system determines, as the standard battery temperature, an average value of the plurality of battery temperatures detected by the plurality of temperature sensors at the first moment.

With reference to the fourth aspect, in a second possible implementation, the first battery set includes a first battery. When determining that the battery in the first battery set has a thermal runaway risk, the battery management system may further obtain a battery voltage of each of the plurality of batteries at the first moment, where a voltage of the first battery at the first moment is a first battery voltage; determine a standard battery voltage based on the battery voltage of each of the plurality of batteries at the first moment; and when a fourth difference between the first battery voltage and the standard battery voltage is greater than a first voltage threshold, determine that the first battery is faulty.

With reference to the fourth aspect, in a third possible implementation, when the fourth difference between the first battery voltage and the standard battery voltage is greater than the first voltage threshold, and the first battery voltage is greater than a second voltage threshold, the battery management system determines that the first battery is faulty, where the first voltage threshold is less than the second voltage threshold.

With reference to the fourth aspect, in a fourth possible implementation, the battery management system determines an average value of battery voltages of all of the plurality of batteries at the first moment as the standard battery voltage.

With reference to the fourth aspect, in a fifth possible implementation, each of the plurality of batteries corresponds to one temperature sensor.

According to a fifth aspect, this application provides a battery pack. The battery pack includes a plurality of battery modules that are provided in any one of the third aspect and the possible implementations of the third aspect and that are connected in series and/or in parallel.

According to a sixth aspect, this application provides a battery pack. The battery pack includes a plurality of battery modules that are provided in any one of the fourth aspect and the possible implementations of the fourth aspect and that are connected in series and/or in parallel.

According to a seventh aspect, this application provides an energy storage system. The energy storage system includes an inverter and the battery pack provided in the fifth aspect, an input end of the inverter is connected to the battery pack, and an output end is connected to an alternating current power grid.

According to an eighth aspect, this application provides an energy storage system. The energy storage system includes an inverter and the battery pack provided in the sixth aspect, an input end of the inverter is connected to the battery pack, and an output end is connected to an alternating current power grid.

It should be understood that mutual reference may be made to implementations and beneficial effects of the plurality of aspects of this application.

### BRIEF DESCRIPTION OF DRAWINGS

FIG. 1 is a schematic diagram of an application scenario of a battery module according to this application;
FIG. 2 is a schematic diagram of a structure of a battery module according to this application;
FIG. 3 is a schematic diagram of another structure of a battery module according to this application;
FIG. 4 is a schematic diagram of another structure of a battery module according to this application;
FIG. 5 is a schematic diagram of another structure of a battery module according to this application;
FIG. 6 is a schematic diagram of still another structure of a battery module according to this application;
FIG. 7 is a schematic flowchart of a safety detection method for a battery module according to this application; and
FIG. 8 is another schematic flowchart of a safety detection method for a battery module according to this application.

### DESCRIPTION OF EMBODIMENTS

A battery module provided in this application may be adapted to different application scenarios such as an application scenario of an energy storage system in a data center, an application scenario of an energy storage system in a communications base station, an energy storage and power supply scenario, an industrial and commercial energy storage application scenario, and an application scenario of a household distributed energy storage secondary lithium-ion battery module. The following provides descriptions by using an energy storage and power supply scenario as an example.

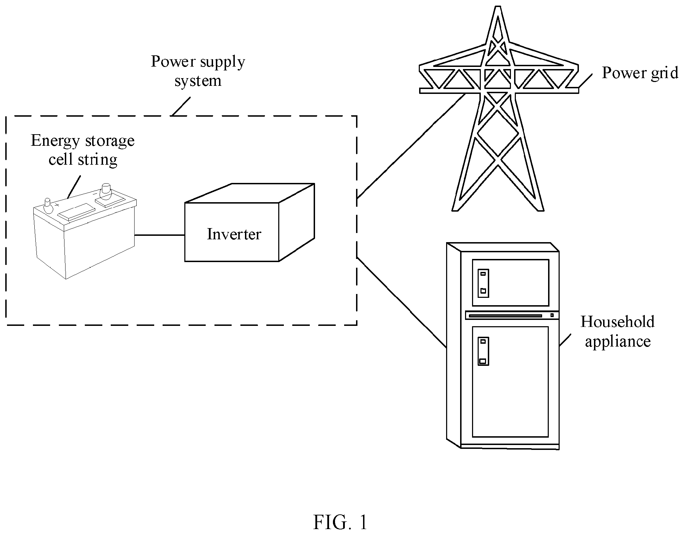

FIG. 1 is a schematic diagram of an application scenario of a battery module according to this application. In an energy storage and power supply scenario, an energy storage system provided in this application is applicable to a power supply system shown in FIG. 1, and a battery pack is applicable to an energy storage cell string in the power supply system shown in FIG. 1. The power supply system includes an energy storage cell string and an inverter, the energy storage cell string is connected to an input end of the inverter, and an output end of the inverter is connected to an alternating current power grid or an appliance device. The energy storage cell string herein may include a plurality of battery modules connected in series and/or in parallel. One battery module may include one or more battery units (a voltage of the battery unit is usually between 2.5 V and 4.2 V) connected in series and/or in parallel, and form a minimum energy storage and management unit. After the power supply system starts to run, the inverter may reversely convert a direct current in the energy storage cell string connected to the input end of the inverter into an alternating current, to supply power a plurality of types of power-consumption devices such as the alternating current power grid or an alternating current load (for example, the appliance device). For the energy storage cell string, because safety detection of the energy storage cell string may be implemented by using an existing temperature sensor, and an additional detection component does not need to be added, the energy storage cell string has a simple structure and low circuit costs, to improve stability of the power supply system, and reduce costs of the power supply system. There is strong applicability.

The foregoing is merely an example of the application scenario of the battery module provided in this application rather than exhaustive examples. The application scenario is not limited in this application.

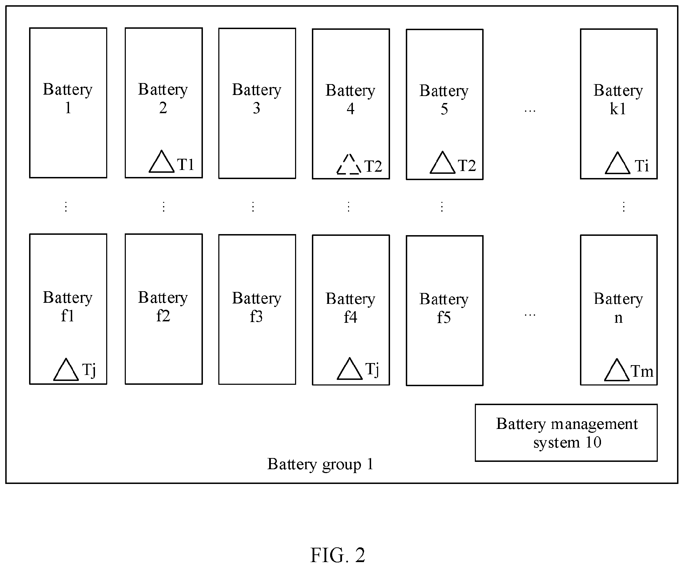

The following describes an example of an operating principle of the battery module provided in this application with reference to FIG. 2 to FIG. 6.

FIG. 2 is a schematic diagram of a structure of a battery module according to this application. As shown in FIG. 2, a battery module 1 includes a battery 1, a battery 2, ..., a battery n; a first temperature sensor T1, ..., an m^{th} temperature sensor Tm that are shown as examples by using triangles; and a battery management system 10. All of the battery 1 to the battery n may be connected in series and/or in parallel. T1 is located on a surface of the battery 2, and T1 corresponds to the battery 1, the battery 2, and a battery 3, and is configured to detect a battery temperature of a first battery set, where a battery included in the first battery set corresponds to T1; T2 may be located on a surface of a battery 4 or a surface of a battery 5, and when T2 is located on the surface of the battery 5, T2 corresponds to the battery 4, the battery 5, and a battery 6 (not shown in the figure), and is configured to detect a battery temperature of a second battery set, where a battery included in the second battery set corresponds to T2; ...; and Tm is located on a surface of the battery n, and Tm corresponds to at least one battery including the battery n, and is configured to detect a battery temperature of an m^{th} battery set, where a battery included in the m^{th} battery set corresponds to Tm. It should be noted that, when a battery set includes a plurality of batteries, a battery temperature of the battery set is a battery temperature of each battery in the battery set. A distribution principle of T1, ..., and Tm in the n batteries is as follows: When each temperature sensor corresponds to one to three batteries, it is ensured that battery temperatures detected by T1, ..., and Tm cover a battery temperature of each battery in the battery module 1.

When an n^{th} temperature sensor corresponds to a plurality of batteries, an n^{th} battery set may include only some of the plurality of batteries corresponding to the n^{th} temperature sensor, or may include all of the plurality of batteries corresponding to the n^{th} temperature sensor, where n is an integer greater than or equal to 1 and less than or equal to m. For example, when n is 1, the first battery set may include any one of the battery 1, the battery 2, and the battery 3, or may include any two of the battery 1, the battery 2, and the battery 3, or may include the battery 1, the battery 2, and the battery 3.

In an optional implementation, after the battery module 1 starts to operate normally, the battery management system 10 obtains, in real time or at a preset frequency at a first moment, a first battery temperature that is of the battery first set and that is detected by T1, ..., and an m^{th} battery temperature that is of the m^{th} battery set and that is detected by Tm, and determines a standard battery temperature based on the first battery temperature of the first battery set, ..., and the m^{th} battery temperature of the m^{th} battery set. Then, the battery management system 10 obtains, at a second moment, a second battery temperature that is of the first battery set and that is detected by T1, and calculates a first temperature change rate of the first battery set based on a first difference between the first battery temperature and the second battery temperature and a second difference between the first moment and the second moment. In addition, when a third difference between the first battery temperature and the standard battery temperature (namely, an absolute difference between the first battery temperature and the standard battery temperature) is greater than a first temperature threshold, and the first temperature change rate is greater than a temperature change rate threshold, the battery management system 10 determines that the battery in the first battery set has a liquid leakage risk.

In another optional implementation, after the battery module 1 starts to operate normally, the battery management system 10 obtains, in real time or at a preset frequency at a first moment, a first battery temperature that is of the battery first set and that is detected by T1, ..., and an m^{th} battery temperature that is of the m^{th} battery set and that is detected by Tm, and determines a standard battery temperature based on the first battery temperature of the first battery set, ..., and the m^{th} battery temperature of the m^{th} battery set. In addition, when a third difference between the first battery temperature and the standard battery temperature (namely, an absolute difference between the first battery temperature and the standard battery temperature) is greater than a first temperature threshold, and the first battery temperature is greater than a second temperature threshold, the battery management system 10 determines that the battery in the first battery set has a thermal runaway risk. The second temperature threshold is greater than the first temperature threshold.

It should be noted that, the standard battery temperature may be determined based on a battery temperature that is of a battery set and that is detected by all temperature sensors in the battery module 1 at the first moment, or may be determined based on a battery temperature that is of a battery set and that is detected by some temperature sensors including the first temperature sensor in the battery module 1 at the first moment.

It can be understood that, the battery management system 10 may implement safety detection of the battery module 1 based on an existing temperature sensor in the battery module 1, and an additional detection component does not need to be added, to effectively reduce costs of the battery module 1. There is strong applicability.

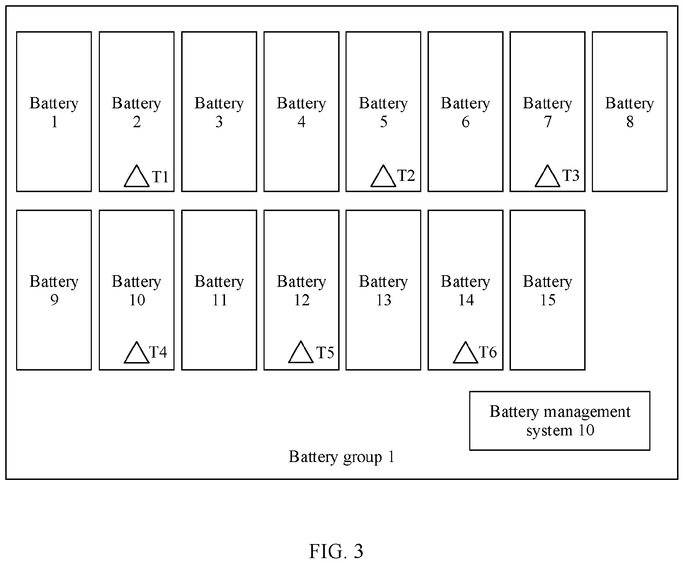

For example, FIG. 3 is a schematic diagram of another structure of a battery module according to this application. As shown in FIG. 3, a battery module 1 includes a battery 1 to a battery 15, a first temperature sensor T1 to a sixth temperature sensor T6, and a battery management system 10. T1 is located on a surface of a battery 2, and T1 corresponds to the battery 1, the battery 2, and a battery 3, and is configured to detect a battery temperature of a first battery set, where a battery included in the first battery set corresponds to T1; T2 is located on a surface of a battery 5, and T2 corresponds to a battery 4, the battery 5, and a battery 6, and is configured to detect a battery temperature of a second battery set, where a battery included in the second battery set corresponds to T2; T3 is located on a surface of a battery 7, and T3 corresponds to the battery 7 and a battery 8, and is configured to detect a battery temperature of a third battery set, where a battery included in the third battery set corresponds to T3; T4 is located on a surface of a battery 10, and T4 corresponds to a battery 9, the battery 10, and a battery 11, and is configured to detect a battery temperature of a fourth battery set, where a battery included in the fourth battery set corresponds to T4; T5 is located on a surface of a battery 12, and T5 corresponds to the battery 12 and a battery 13, and is configured to detect a battery temperature of a fifth battery set, where a battery included in the fifth battery set corresponds to T5; and T6 is located on a surface of a battery 14, and T6 corresponds to the battery 14 and the battery 15, and is configured to detect a battery temperature of a sixth battery set, where a battery included in the sixth battery set corresponds to T6.

When an n^{th} temperature sensor corresponds to a plurality of batteries, an n^{th} battery set may include only some of the plurality of batteries corresponding to the n^{th} temperature sensor, or may include all of the plurality of batteries corresponding to the n^{th} temperature sensor, where n is a positive integer less than 7. For example, when n is 1, the first battery set may include only any one of the battery 1, the battery 2, and the battery 3 that correspond to T1, or may include only any two of the battery 1, the battery 2, and the battery 3, or may include all of the battery 1, the battery 2, and the battery 3.

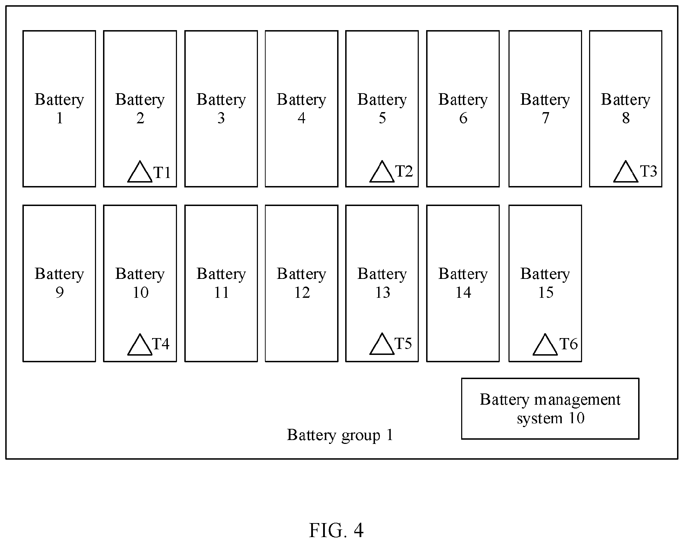

It should be noted that there are at least one distribution manner of T1 to T6 in the 15 batteries, and when each temperature sensor corresponds to one to three batteries (in other words, battery temperatures of the one to three batteries corresponding to each temperature sensor are all battery temperatures detected by the temperature sensor), it only needs to be ensured that battery temperatures detected by T1 to T6 cover a battery temperature of each battery in the battery module 1. Optionally, a distribution manner of T1 to T6 in the 15 batteries may alternatively be a distribution manner shown in FIG. 4. As shown in FIG. 4, T1 is located on a surface of a battery 2, and T1 corresponds to the battery 1, the battery 2, and a battery 3; T2 is located on a surface of a battery 5, and T2 corresponds to a battery 4, the battery 5, and a battery 6; T3 is located on a surface of a battery 8, and T3 corresponds to a battery 7 and the battery 8; T4 is located on a surface of a battery 10, and T4 corresponds to a battery 9, the battery 10, and a battery 11; T5 is located on a surface of a battery 13, and T5 corresponds to a battery 12, the battery 13, and a battery 14; and T6 is located on a surface of the battery 15, and T6 corresponds to the battery 15.

In an optional implementation, after the battery module 1 starts to operate, the battery management system 10 obtains, in real time or at a preset frequency, battery temperatures that are of a plurality of battery sets and that are detected by a plurality of temperature sensors including T1 in T1 to T6 at a first moment (namely, a current moment), and determines, as a standard battery temperature, an average value of the battery temperatures that are of the plurality of battery sets and that are detected by the plurality of temperature sensors at the first moment. Then, the battery management system 10 obtains a second battery temperature that is of the first battery set and that is detected by T1 at the second moment (later than the first moment), and calculates a first temperature change rate of the first battery set based on a first difference between a first battery temperature that is of the first battery set and that is detected by T1 at the first moment and the second battery temperature and a second difference between the first moment and the second moment. When a third difference between the first battery temperature and the standard battery temperature is greater than a first temperature threshold, and the first temperature change rate is greater than a temperature change rate threshold, the battery management system 10 determines that the battery in the first battery set has a liquid leakage risk, and warns that the battery module 1 has a liquid leakage risk. Otherwise, the battery management system 10 determines that the battery in the first battery set does not have a liquid leakage risk, and then continues to determine whether the battery in the second battery set has a liquid leakage risk, and repeats the foregoing steps until detection of a liquid leakage risk of each battery in the battery module 1 is completed.

It should be noted that, the plurality of temperature sensors including T1 in T1 to T6 may be the six temperature sensors T1 to T6, or may be some temperature sensors including T1 in T1 to T6, for example, temperature sensors T1 to T3, temperature sensors T1 to T4, or temperature sensors T1, T2, and T4. In other words, the standard battery temperature herein may be an average value of the battery temperatures that are of the six battery sets and that are detected by the six temperature sensors T1 to T6, or may be an average value of battery temperatures that are of a plurality of battery sets and that are detected by the some temperature sensors including T1 in T1 to T6. The following provides descriptions by using an example in which the standard battery temperature is the average value of the battery temperatures that are of the six battery sets and that are detected by the six temperature sensors T1 to T6.

In an optional embodiment, the battery management system 10 obtains, at a preset frequency, a first battery temperature of the first battery set, a battery temperature of the second battery set, a battery temperature of the third battery set, a battery temperature of the fourth battery set, a battery temperature of the fifth battery set, and a battery temperature of the sixth battery set that are detected by T1 to T6 at a first moment (a current moment), and determines, as a standard battery temperature, an average value of battery temperatures that are of the six battery sets and that are detected by T1 to T6 at the first moment. Then, the battery management system 10 obtains a second battery temperature that is of the first battery set and that is detected by T1 at a second moment. The second moment is later than the first moment, and the second moment is adjacent to the first moment. Then, the battery management system 10 calculates a temperature change rate (T12-T11)/(t2-t1) of the first battery set. Herein, T12 and T11 are respectively the second battery temperature and the first battery temperature, and t2 and t1 are respectively the second moment and the first moment. When a third difference (namely, an absolute difference) between the first battery temperature and the standard battery temperature is greater than a first temperature threshold and the temperature change rate is greater than a temperature change rate threshold, which indicates that the first battery temperature of the first battery set is subject to an outlier and a temperature of the first battery set changes too quickly, the battery management system 10 determines that the battery in the first battery set has a liquid leakage risk, and warns that a valve of the first battery set is open and a liquid leakage exists. When the first battery set includes only the battery 2, the battery management system 10 may determine that the battery 2 has a liquid leakage risk; when the first battery set includes only the battery 2 and the battery 3, the battery management system 10 may determine that the battery 2 and the battery 3 have a liquid leakage risk; and when the first battery set includes the battery 1, the battery 2, and the battery 3, the battery management system 10 may determine that the battery 1, the battery 2, and the battery 3 have a liquid leakage risk. It can be understood that, in this embodiment, whether a battery temperature that is of a battery set and that is detected by a temperature sensor in the battery module 1 is subject to an outlier and whether a temperature of the battery set changes too quickly may be determined based on a temperature change characteristic (namely, an absolute temperature difference and a temperature change rate) of the battery temperature, and whether some or all of at least one battery corresponding to the temperature sensor have a liquid leakage risk is further determined. Therefore, not only a liquid leakage risk of the battery module 1 can be detected, but also a battery having a liquid leakage risk can be positioned. There is strong applicability.

In another optional embodiment, when the battery management system 10 determines, in the manner of detecting whether a battery has a liquid leakage risk in the foregoing embodiment, that the battery in the first battery set has a liquid leakage risk, and the first battery temperature of the first battery set at the first moment is greater than a second temperature threshold, which indicates that the first battery temperature of the first battery set is too high, the battery management system 10 determines that the battery in the first battery set still has a thermal runaway risk, and warns that the first battery set has thermal runaway. The first temperature threshold is less than the second temperature threshold. It can be understood that, after it is determined that a battery has a liquid leakage risk, if it is determined that the battery still has a thermal runaway risk, thermal runaway may be effectively warned based on a time difference between a time point at which a liquid leakage of the battery is triggered and a time point at which thermal runaway of the battery is triggered, to prevent the battery from firing and exploding, and reduce a safety risk in a battery application stage.

Further, when determining that the battery in the first battery set has a liquid leakage risk, the battery management system 10 may further determine, based on a battery voltage, whether an electrochemical cell of the battery in the first battery set is faulty.

In an optional embodiment, the battery management system 10 obtains, in real time or at a preset frequency, battery voltages of each battery in the battery module 1 at different moments by using a voltage detector connected to each battery, and stores the obtained battery voltages of each battery at different moments. When determining that the battery in the first battery set has a liquid leakage risk, the battery management system 10 may obtain battery voltages of a plurality of batteries (including the first battery set) in the battery module 1 at the first moment based on a stored battery voltage history record, and determine an average value of the battery voltages of the plurality of batteries at the first moment as a standard battery voltage. When a fourth difference (namely, an absolute difference) between a first battery voltage of the battery 1 in the first battery set at the first moment and the standard battery voltage is greater than a first voltage threshold, which indicates that the first battery voltage of the battery 1 is subject to an outlier, the battery management system 10 determines that an electrochemical cell of the battery 1 is faulty, and warns that the electrochemical cell of the battery 1 is faulty, so that a worker replaces the faulty electrochemical cell of the battery 1 as soon as possible, to reduce fault maintenance duration of the battery module 1.

In another optional embodiment, the battery management system 10 obtains, in real time or at a preset frequency, battery voltages of each battery in the battery module 1 at different moments by using a voltage detector connected to each battery, and stores the obtained battery voltages of each battery at different moments. When determining that the battery in the first battery set has a liquid leakage risk, the battery management system 10 may obtain battery voltages of a plurality of batteries (including the first battery set) in the battery module 1 at the first moment based on a stored battery voltage history record, and determine an average value of the battery voltages of the plurality of batteries at the first moment as a standard battery voltage. Then, the battery management system 10 obtains a second battery voltage of the battery 1 at the second moment, and calculates a voltage change rate (V12-V11)/(t2-t1) of the battery 1. Herein, V12 and V11 are respectively the second battery voltage and a first battery voltage, t2 and t1 are respectively the second moment and the first moment, and the second moment is later than the first moment. When a fourth difference (namely, an absolute difference) between a first battery voltage of the battery 1 in the first battery set at the first moment and the standard battery voltage is greater than a first voltage threshold, and the voltage change rate is greater than a voltage change rate threshold, which indicates that the first battery voltage of the battery 1 is subject to an outlier and a voltage of the battery 1 changes too quickly, the battery management system 10 determines that an electrochemical cell of the battery 1 is faulty, and warns that the electrochemical cell of the battery 1 is faulty, so that a worker replaces the faulty electrochemical cell of the battery 1 as soon as possible, to reduce fault maintenance duration of the battery module 1. A second voltage threshold is greater than the first voltage threshold. In addition, compared with a previous embodiment, in this embodiment, not only whether the voltage of the battery 1 is subject to an outlier is considered, but also a factor of whether the voltage of the battery 1 changes too quickly is considered. Therefore, fault detection accuracy of an electrochemical cell of a battery can be effectively improved, and there is strong applicability.

The standard battery voltage in the foregoing two embodiments may be an average value of battery voltages of some batteries including the first battery set in the battery module 1 at the first moment, or may be an average value of battery voltages of all batteries in the battery module 1 at the first moment.

In another optional implementation, after the battery module 1 starts to operate, the battery management system 10 obtains, in real time or at a preset frequency, battery temperatures that are of a plurality of battery sets and that are detected by a plurality of temperature sensors including T1 in T1 to T6 at a first moment (namely, a current moment), and determines, as a standard battery temperature, an average value of the battery temperatures that are of the plurality of battery sets and that are detected by the plurality of temperature sensors at the first moment. When a third difference between a first battery temperature that is of the first battery set and that is detected by T1 at the first moment and the standard battery temperature is greater than a first temperature threshold, and the first battery temperature is greater than a second temperature threshold, the battery management system 10 determines that the battery in the first battery set has a thermal runaway risk. The second temperature threshold is greater than the first temperature threshold. Then, when determining that the battery in the first battery set has a thermal runaway risk, the battery management system 10 warns that the battery module 1 has a thermal runaway risk. Otherwise, the battery management system 10 determines that the battery in the first battery set does not have a thermal runaway risk, and then continues to determine whether the battery in the second battery set has a thermal runaway risk, and repeats the foregoing steps until detection of a thermal runaway risk of each battery in the battery module 1 is completed.

The standard battery temperature may be an average value of battery temperatures that are of the six battery sets and that are detected by the six temperature sensors T 1 to T6 at the first moment, or may be an average value of battery temperatures that are of a plurality of battery sets and that are detected by some temperature sensors including T 1 in T1 to T6 at the first moment. The following provides descriptions by using an example in which the standard battery temperature is the average value of the battery temperatures that are of the six battery sets and that are detected by the six temperature sensors T 1 to T6 at the first moment.

In an optional embodiment, the battery management system 10 obtains a first battery temperature of the first battery set, a battery temperature of the second battery set, a battery temperature of the third battery set, a battery temperature of the fourth battery set, a battery temperature of the fifth battery set, and a battery temperature of the sixth battery set that are detected by T 1 to T6 at a first moment (a current moment), and determines, as a standard battery temperature, an average value of battery temperatures that are of the six battery sets and that are detected by T 1 to T6 at the first moment. When a third difference (namely, an absolute difference) between the first battery temperature and the standard battery temperature is greater than a first temperature threshold, and the first temperature threshold is greater than a second temperature threshold, which indicates that the first battery temperature of the first battery set is subject to an outlier and the first battery temperature is too high, the battery management system 10 determines that the first battery set has a thermal runaway risk, and warns that the first battery set has thermal runaway. When the first battery set includes only the battery 1, the battery management system 10 may determine that the battery 1 has a thermal runaway risk; when the first battery set includes only the battery 1 and the battery 3, the battery management system 10 may determine that the battery 1 and the battery 3 have a thermal runaway risk; and when the first battery set includes the battery 1, the battery 2, and the battery 3, the battery management system 10 may determine that the battery 1, the battery 2, and the battery 3 have a thermal runaway risk.

It can be understood that, in this embodiment, whether a battery temperature that is of a battery set and that is detected by a temperature sensor in the battery module 1 is subject to an outlier and whether a battery temperature of the battery set is too high may be determined based on the battery temperature of the battery set, and whether some or all of at least one battery corresponding to the temperature sensor have a thermal runaway risk is further determined. Therefore, not only a thermal runaway risk of the battery module 1 can be detected, but also a battery having a thermal runaway risk can be positioned. There is strong applicability.

Further, when determining that the battery in the first battery set has a thermal runaway risk, the battery management system 10 may further determine, based on a battery voltage, whether an electrochemical cell of the battery in the first battery set is faulty.

In an optional embodiment, the battery management system 10 obtains, in real time or at a preset frequency, battery voltages of each battery in the battery module 1 at different moments by using a voltage detector connected to each battery, and stores the obtained battery voltages of each battery at different moments. When determining that the battery in the first battery set has a thermal runaway risk, the battery management system 10 may obtain battery voltages of a plurality of batteries (including the first battery set) in the battery module 1 at the first moment based on a stored battery voltage history record, and determine an average value of the battery voltages of the plurality of batteries at the first moment as a standard battery voltage. When a fourth difference (namely, an absolute difference) between a first battery voltage of the battery 1 in the first battery set at the first moment and the standard battery voltage is greater than a first voltage threshold, which indicates that the first battery voltage of the battery 1 is subject to an outlier, the battery management system 10 determines that an electrochemical cell of the battery 1 is faulty, and warns that the electrochemical cell of the battery 1 is faulty, so that a worker replaces the faulty electrochemical cell of the battery 1 as soon as possible, to reduce fault maintenance duration of the battery module 1.

In another optional embodiment, the battery management system 10 obtains, in real time or at a preset frequency, battery voltages of each battery in the battery module 1 at different moments by using a voltage detector connected to each battery, and stores the obtained battery voltages of each battery at different moments. When determining that the battery in the first battery set has a thermal runaway risk, the battery management system 10 may obtain battery voltages of a plurality of batteries (including the first battery set) in the battery module 1 at the first moment based on a stored battery voltage history record, and determine an average value of the battery voltages of the plurality of batteries at the first moment as a standard battery voltage. When a fourth difference (namely, an absolute difference) between a first battery voltage of the battery 1 in the first battery set at the first moment and the standard battery voltage is greater than a first voltage threshold, and the first battery voltage is greater than a second voltage threshold, which indicates that the first battery voltage of the battery 1 is subject to an outlier and the first battery voltage of the battery 1 is too high, the battery management system 10 determines that an electrochemical cell of the battery 1 is faulty, and warns that the electrochemical cell of the battery 1 is faulty, so that a worker replaces the faulty electrochemical cell of the battery 1 as soon as possible, to reduce fault maintenance duration of the battery module 1. The second voltage threshold is greater than the first voltage threshold. In addition, compared with a previous embodiment, in this embodiment, not only whether a voltage of the battery 1 is subject to an outlier is considered, but also a factor of whether the voltage of the battery 1 is too high is considered. Therefore, fault detection accuracy of an electrochemical cell of a battery can be effectively improved, and there is strong applicability.

The standard battery voltage in the foregoing two embodiments may be an average value of battery voltages of some batteries including the first battery set in the battery module 1 at the first moment, or may be an average value of battery voltages of all batteries in the battery module 1 at the first moment.

In this application, safety detection of the battery module 1 may be implemented based on an existing temperature sensor in the battery module 1, and an additional detection component does not need to be added, to effectively reduce costs of the battery module 1. There is strong applicability.

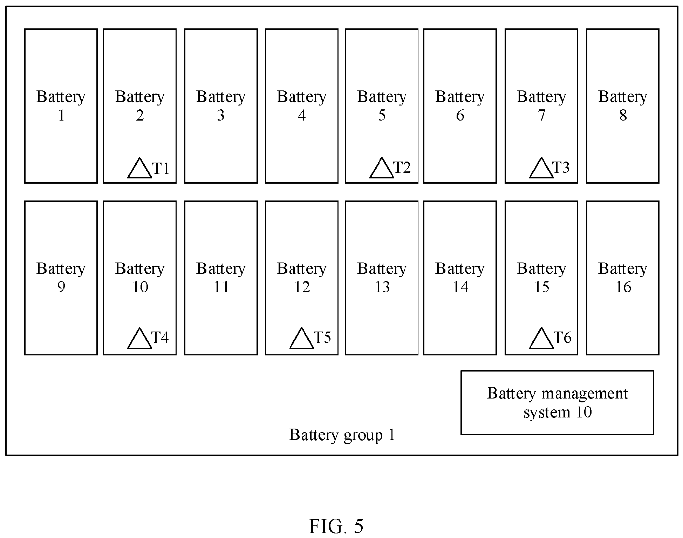

For example, FIG. 5 is a schematic diagram of another structure of a battery module according to this application. As shown in FIG. 5, a battery module 1 includes a battery 1 to a battery 16, a first temperature sensor T1 to a sixth temperature sensor T6, and a battery management system 10. T1 is located on a surface of a battery 2, and T1 corresponds to the battery 1, the battery 2, and a battery 3, and is configured to detect a battery temperature of a first battery set, where a battery included in the first battery set corresponds to T1; T2 is located on a surface of a battery 5, and T2 corresponds to a battery 4, the battery 5, and a battery 6, and is configured to detect a battery temperature of a second battery set; T3 is located on a surface of a battery 7, and T3 corresponds to the battery 7 and a battery 8, and is configured to detect a battery temperature of a third battery set; T4 is located on a surface of a battery 10, and T4 corresponds to a battery 9, the battery 10, and a battery 11, and is configured to detect a battery temperature of a fourth battery set; T5 is located on a surface of a battery 12, and T5 corresponds to the battery 12 and a battery 13, and is configured to detect a battery temperature of a fifth battery set; and T6 is located on a surface of a battery 15, and T6 corresponds to a battery 14, the battery 15, and the battery 16, and is configured to detect a battery temperature of a sixth battery set.

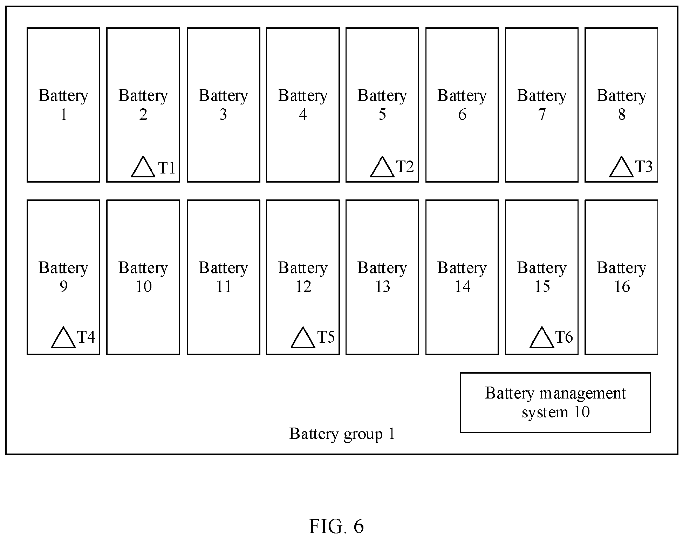

Optionally, a distribution manner of T1 to T6 in the 16 batteries may alternatively be a distribution manner shown in FIG. 6. As shown in FIG. 6, T1 is located on a surface of a battery 2, and T1 corresponds to the battery 1, the battery 2, and a battery 3; T2 is located on a surface of a battery 5, and T2 corresponds to a battery 4, the battery 5, and a battery 6; T3 is located on a surface of a battery 8, and T3 corresponds to a battery 7 and the battery 8; T4 is located on a surface of a battery 9, and T4 corresponds to the battery 9 and a battery 10; T5 is located on a surface of a battery 12, and T5 corresponds to a battery 11, the battery 12, and a battery 13; and T6 is located on a surface of a battery 15, and T6 corresponds to a battery 14, the battery 15, and a battery 16.

Herein, for a specific implementation process of performing safety detection on the battery module 1 shown in FIG. 5, refer to the descriptions in the embodiment shown in FIG. 3. Details are not described herein again.

It can be understood that, in this application, safety detection of the battery module 1 may be implemented based on an existing temperature sensor in the battery module 1, and an additional detection component does not need to be added, to effectively reduce costs of the battery module 1. There is strong applicability.

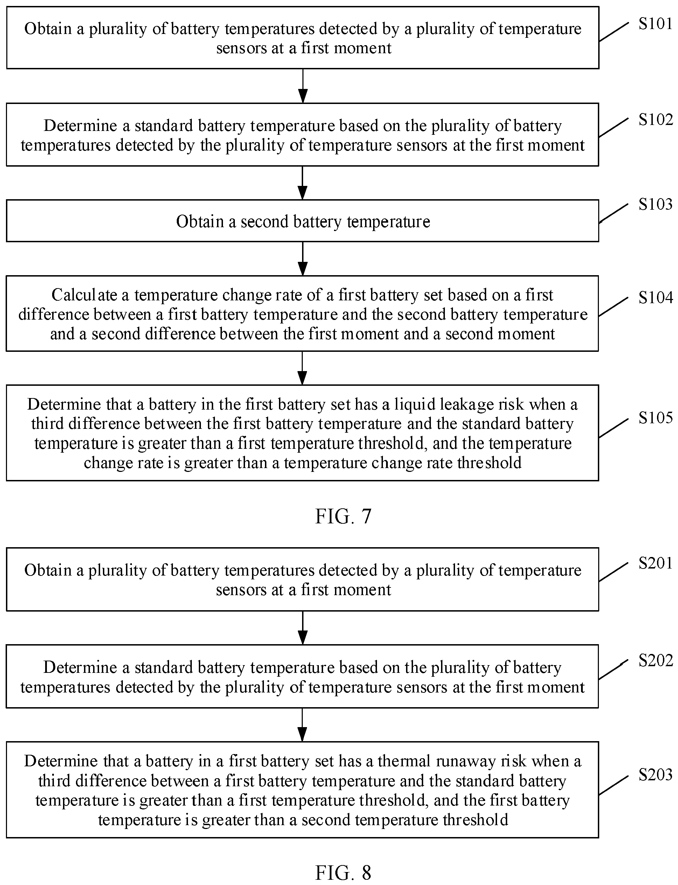

FIG. 7 is a schematic flowchart of a safety detection method for a battery module according to this application. The safety detection method for a battery module provided in this embodiment of this application is applicable to a battery management system 10 in the battery module 1 shown in FIG. 2 to FIG. 6. The safety detection method for a battery module may include the following steps.

S101: Obtain a plurality of battery temperatures detected by a plurality of temperature sensors at a first moment. The plurality of temperature sensors include a first temperature sensor, a battery temperature detected by the first temperature sensor at the first moment is a first battery temperature of a first battery set, and a battery included in the first battery set is located in a plurality of batteries and corresponds to the first temperature sensor.

In an optional implementation, after the battery module starts to operate normally, the battery management system obtains, in real time or at a preset frequency, battery temperatures that are of a plurality of battery sets and that are detected by the plurality of temperature sensors in the battery module at the first moment (for example, a current moment).

S102: Determine a standard battery temperature based on the plurality of battery temperatures detected by the plurality of temperature sensors at the first moment.

Specifically, the battery management system determines, as the standard battery temperature, an average value of the plurality of battery temperatures detected by the plurality of temperature sensors at the first moment. The plurality of temperature sensors herein may be all temperature sensors in the battery module, or may be some temperature sensors including the first temperature sensor in the battery module.

S103: Obtain a second battery temperature.

The second battery temperature is a battery temperature of the first battery set at a second moment, and the second moment is later than the first moment.

S104: Calculate a temperature change rate of the first battery set based on a first difference between the first battery temperature and the second battery temperature and a second difference between the first moment and the second moment.

Specifically, the battery management system determines a ratio between the first difference and the second difference as the temperature change rate of the first battery set.

S105: When a third difference between the first battery temperature and the standard battery temperature is greater than a first temperature threshold, and the temperature change rate is greater than a temperature change rate threshold, determine that the battery in the first battery set has a liquid leakage risk.

In an optional implementation, the battery management system calculates an absolute difference between the first battery temperature and the standard battery temperature, to obtain a third difference, and when the third difference is greater than the first temperature threshold and the temperature change rate is greater than the temperature change rate threshold, determines that the battery in the first battery set has a liquid leakage risk.

In a specific implementation, for more operations performed by the battery management system in a safety detection method for a battery module provided in this application, refer to implementations performed by the battery management system 10 shown in FIG. 2 to FIG. 6. Details are not described herein again.

In this embodiment, whether a battery temperature that is of a battery set and that is detected by a temperature sensor in the battery module is subject to an outlier and whether a temperature of the battery set changes too quickly may be determined based on the battery temperature of the battery set, and whether some or all of at least one battery corresponding to the temperature sensor have a liquid leakage risk is further determined. Therefore, not only a liquid leakage risk of the battery module can be detected, but also a battery having a liquid leakage risk can be positioned. There is strong applicability.

FIG. 8 is another schematic flowchart of a safety detection method for a battery module according to this application. The safety detection method for a battery module provided in this embodiment of this application is applicable to a battery management system 10 in the battery module 1 shown in FIG. 2 to FIG. 6. The safety detection method for a battery module may include the following steps.

S201: Obtain a plurality of battery temperatures detected by a plurality of temperature sensors at a first moment. The plurality of temperature sensors include a first temperature sensor, a battery temperature detected by the first temperature sensor at the first moment is a first battery temperature of a first battery set, and a battery included in the first battery set is located in a plurality of batteries and corresponds to the first temperature sensor.

In an optional implementation, after the battery module starts to operate normally, the battery management system obtains, in real time or at a preset frequency, battery temperatures that are of a plurality of battery sets and that are detected by the plurality of temperature sensors in the battery module at the first moment (for example, a current moment).

S202: Determine a standard battery temperature based on the plurality of battery temperatures detected by the plurality of temperature sensors at the first moment.

Specifically, the battery management system determines, as the standard battery temperature, an average value of the plurality of battery temperatures detected by the plurality of temperature sensors at the first moment. The plurality of temperature sensors herein may be all temperature sensors in the battery module, or may be some temperature sensors including the first temperature sensor in the battery module.

S203: When a third difference between the first battery temperature and the standard battery temperature is greater than a first temperature threshold, and the first battery temperature is greater than a second temperature threshold, determine that the battery in the first battery set has a thermal runaway risk.

The second temperature threshold is greater than the first temperature threshold.

In an optional implementation, the battery management system calculates an absolute difference between the first battery temperature and the standard battery temperature, to obtain a third difference, and when the third difference is greater than the first temperature threshold and the first battery temperature is greater than the second temperature threshold, determines that the battery in the first battery set has a thermal runaway risk.

In a specific implementation, for more operations performed by the battery management system in a safety detection method for a battery module provided in this application, refer to implementations performed by the battery management system 10 shown in FIG. 2 to FIG. 6. Details are not described herein again.

In this embodiment, whether a battery temperature that is of a battery set and that is detected by a temperature sensor in the battery module is subject to an outlier and whether a battery temperature of the battery set is too high may be determined based on the battery temperature of the battery set, and whether some or all of at least one battery corresponding to the temperature sensor have a thermal runaway risk is further determined. Therefore, not only a thermal runaway risk of the battery module can be detected, but also a battery having a thermal runaway risk can be positioned. There is strong applicability.

It should be noted that, a battery in this application includes but is not limited to a lithium battery, a lead-acid battery, a sodium battery, a magnesium battery, an aluminum battery, and a potassium battery, and the battery is applicable to batteries of all appearances, including but not limited to a soft pack battery, a cylindrical battery, a square battery, or a special shape battery.

In this application, safety detection of the battery module may be implemented based on an existing temperature sensor in the battery module, and an additional detection component does not need to be added, to effectively reduce costs of the battery module and safety detection costs of the battery module. There is strong applicability.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A safety detection method for a battery module, wherein the battery module comprises a plurality of temperature sensors and a plurality of batteries, each temperature sensor corresponds to one battery or a plurality of batteries located in a same row, each temperature sensor is configured to detect a battery temperature of the corresponding one or more batteries, the plurality of temperature sensors comprise a first temperature sensor, and the method comprises:
obtaining a plurality of battery temperatures detected by the plurality of temperature sensors at a first moment, wherein a battery temperature detected by the first temperature sensor at the first moment is a first battery temperature of a first battery set, and a battery comprised in the first battery set is located in the plurality of batteries and corresponds to the first temperature sensor;
determining a standard battery temperature based on the plurality of battery temperatures detected by the plurality of temperature sensors at the first moment;
obtaining a second battery temperature, wherein the second battery temperature is a battery temperature of the first battery set at a second moment, and the second moment is later than the first moment;
calculating a temperature change rate of the first battery set based on a first difference between the first battery temperature and the second battery temperature and a second difference between the first moment and the second moment; and
determining that a battery in the first battery set has a liquid leakage risk when a third difference between the first battery temperature and the standard battery temperature is greater than a first temperature threshold, and the temperature change rate is greater than a temperature change rate threshold.

2. The method according to claim 1, wherein the determining a standard battery temperature based on the plurality of battery temperatures detected by the plurality of temperature sensors at the first moment specifically comprises:
determining an average value of the plurality of battery temperatures detected by the plurality of temperature sensors at the first moment as the standard battery temperature.

3. The method according to claim 1 or 2, wherein the first battery set comprises a first battery; and
the method further comprises:
obtaining a battery voltage of each of the plurality of batteries at the first moment, wherein a voltage of the first battery at the first moment is a first battery voltage;
determining a standard battery voltage based on the battery voltage of each of the plurality of batteries at the first moment; and
determining that the first battery is faulty when a fourth difference between the first battery voltage and the standard battery voltage is greater than a first voltage threshold.

4. The method according to claim 3, wherein the method further comprises:
obtaining a second battery voltage, wherein the second battery voltage is a voltage of the first battery at the second moment;
determining a voltage change rate of the first battery based on a fifth difference between the second battery voltage and the first battery voltage and the second difference; and
the determining that the first battery is faulty when a fourth difference between the first battery voltage and the standard battery voltage is greater than a first voltage threshold comprises:
determining that the first battery is faulty when the fourth difference between the first battery voltage and the standard battery voltage is greater than the first voltage threshold, and the voltage change rate is greater than a voltage change rate threshold.

5. The method according to claim 3 or 4, wherein the determining a standard battery voltage based on the battery voltage of each of the plurality of batteries at the first moment specifically comprises:
determining an average value of battery voltages of the plurality of batteries at the first moment as the standard battery voltage.

6. The method according to any one of claims 1 to 5, wherein the first moment is adjacent to the second moment.

7. The method according to any one of claims 1 to 6, wherein each of the plurality of batteries corresponds to one temperature sensor.

8. A battery module, wherein the battery module comprises a battery management system, a plurality of temperature sensors, and a plurality of batteries, and the plurality of temperature sensors comprise a first temperature sensor, wherein
the temperature sensor corresponds to one battery or a plurality of batteries located in a same row, and is configured to detect a battery temperature of the corresponding one battery or plurality of batteries; and
the battery management system is configured to: obtain a plurality of battery temperatures detected by the plurality of temperature sensors at a first moment, wherein a battery temperature detected by a first temperature sensor at the first moment is a first battery temperature of a first battery set, and a battery comprised in the first battery set is located in the plurality of batteries and corresponds to the first temperature sensor; determine a standard battery temperature based on the plurality of battery temperatures detected by the plurality of temperature sensors at the first moment; obtain a second battery temperature, wherein the second battery temperature is a battery temperature of the first battery set at a second moment, and the second moment is later than the first moment; calculate a temperature change rate of the first battery set based on a first difference between the first battery temperature and the second battery temperature and a second difference between the first moment and the second moment; and determine that a battery in the first battery set has a liquid leakage risk when a third difference between the first battery temperature and the standard battery temperature is greater than a first temperature threshold, and the temperature change rate is greater than a temperature change rate threshold.

9. The battery module according to claim 8, wherein the battery management system is configured to determine an average value of the plurality of battery temperatures detected by the plurality of temperature sensors at the first moment as the standard battery temperature.

10. The battery module according to claim 8 or 9, wherein the first battery set comprises a first battery; and
the battery management system is further configured to: obtain a battery voltage of each of the plurality of batteries at the first moment, wherein a voltage of the first battery at the first moment is a first battery voltage; determine a standard battery voltage based on the battery voltage of each of the plurality of batteries at the first moment; and determine that the first battery is faulty when a fourth difference between the first battery voltage and the standard battery voltage is greater than a first voltage threshold.

11. The battery module according to claim 10, wherein the battery management system is further configured to: obtain a second battery voltage, wherein the second battery voltage is a voltage of the first battery at the second moment; and determine a voltage change rate of the first battery based on a fifth difference between the second battery voltage and the first battery voltage and the second difference; and
the battery management system is configured to determine that the first battery is faulty when the fourth difference between the first battery voltage and the standard battery voltage is greater than the first voltage threshold, and the voltage change rate is greater than a voltage change rate threshold.

12. The battery module according to claim 10 or 11, wherein the battery management system is configured to determine an average value of battery voltages of the plurality of batteries at the first moment as the standard battery voltage.

13. The battery module according to any one of claims 8 to 12, wherein the first moment is adj acent to the second moment.

14. A battery pack, wherein the battery pack comprises a plurality of battery modules according to any one of claims 8 to 13 that are connected in series and/or in parallel.

15. An energy storage system, wherein the energy storage system comprises an inverter and the battery pack according to claim 14, an input end of the inverter is connected to the battery pack, and an output end of the inverter is connected to an alternating current power grid.
